# EUROPÄISCHE PATENTANMELDUNG

(11) **EP 1 975 669 A2**
(43) Veröffentlichungstag der Anmeldung: **01.10.2008**
(21) Anmeldenummer: 08005413.3
(22) Anmeldetag: 22.03.2008
(51) Int. Cl.: G02B 21/00

(54) **Optische Anordnung zum Erzeugen eines Lichtblattes**

(30) Priorität: 29.03.2007 DE 102007015063
(71) Anmelder: Carl Zeiss MicroImaging GmbH, 07745 Jena (DE)
(72) Erfinder: Lippert, Helmut, Dr., 07743 Jena (DE); Radt, Benno, 07743 Jena (DE); Wald, Matthias Dr., 07751 Jena (DE)
(74) Vertreter: Hampe, Holger

(57) **Zusammenfassung**

Die Erfindung bezieht sich auf eine optische Anordnung mit einer Lichtquelle zum Abstrahlen eines Lichtbündels und mit optischen Elementen zur Umwandlung dieses Lichtbündels in die Form eines Lichtblattes (3), insbesondere geeignet zur Beleuchtung einzelner Ebenen einer dreidimensionalen Probe (1) bei der Selective Plane Illumination Microscopy (SPIM).

Erfindungsgemäß sind bei einer solchen optischen Anordnung Mittel vorgesehen zur Variation des Querschnittes des Lichtblattes (3), zur Variation der Länge des Lichtblattes (3), und/oder zur Beeinflussung der Richtung, mit der innerhalb des Lichtblattes (3) verlaufende einzelne Strahlungsanteile auf die Probensubstanz gerichtet sind.

Damit wird sowohl die Anpassung der Geometrie des Lichtblattes (3) an die Beleuchtungserfordernisse bei der Beobachtung ein und derselben Probenebene mit mehreren verschiedenartigen Objektiven ermöglicht, als auch bei Bedarf eine Reduzierung der Schatten erreicht, die sich aufgrund der Beleuchtung innerhalb der beobachteten Probenebene ausbilden.

## Beschreibung

Die Erfindung bezieht sich auf eine optische Anordnung mit einer Lichtquelle zum Abstrahlen eines Lichtbündels und mit optischen Elementen zur Umwandlung dieses Lichtbündels in die Form eines Lichtblattes, insbesondere geeignet zur Beleuchtung einzelner Ebenen einer dreidimensionalen Probe bei der Selective Plane Illumination Microscopy (SPIM).

Im Unterschied zur konfokalen Laser-Scanning-Microscopy (LSM), bei der eine dreidimensionale Probe in einzelnen, unterschiedlich tiefen Ebenen Punkt für Punkt abgetastet wird und die dabei gewonnenen Bildinformationen nachfolgend zu einer dreidimensionalen Abbildung der Probe zusammengesetzt werden, beruht die SPIM-Technologie auf der Weitfeld-Mikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Prinzipiell werden bei der SPIM-Technologie Fluorophore, die an sich in der Probe enthalten sind oder zur Kontrastierung in die Probe eingebracht wurden, mit Laserlicht angeregt, wobei die Laserstrahlung zu einem so genannten "Lichtblatt" geformt ist. Mit dem Lichtblatt wird jeweils eine ausgewählte Ebene in der Tiefe der Probe beleuchtet und mit einer Abbildungsoptik ein Bild dieser Probenebene in Form eines optischen Schnittes gewonnen.

Um die Geometrie des Lichtblattes zu verdeutlichen sei im Zusammenhang mit der vorliegenden Erfindung angenommen, dass das Lichtblatt einen in den Koordinatenrichtungen X, Y senkrecht zur Strahlungsrichtung des Laserlichtes ausgedehnten Querschnitt und eine in der Koordinatenrichtung Z entlang der Strahlungsrichtung ausgedehnte Länge hat.

Die optische Achse des Objektivs, mit dem die beleuchtete Probenebene abgebildet oder beobachtet werden soll, ist dabei senkrecht zur Koordinatenrichtung Z ausgerichtet.

In DE 102 57 423 A1 und in DE 10 2005 027077 A1 sind optische Anordnungen zur Erzeugung eines Lichtblattes im Zusammenhang mit der SPIM-Technologie beschrieben.

Mit diesen Anordnungen entsteht lediglich ein starres Lichtblatt, das in seiner Dicke, die der Ausdehnung in der Koordinate X entsprechen soll, nicht variabel ist. Dieser Umstand ist insbesondere dann nachteilig, wenn ein und dieselbe Ebene einer Probe zeitlich nacheinander mit verschiedenen Objektiven abgebildet werden soll, die sich hinsichtlich ihrer optischen Abbildungseigenschaften voneinander unterscheiden.

In diesen Fällen ist die Möglichkeit der Anpassung der Geometrie des Lichtblattes, vor allem eine Anpassung seiner Dicke, an das jeweilige Objektiv wünschenswert, so dass tatsächlich nur die interessierende Ebene der Probe ausgeleuchtet und so ein unerwünschtes Ausbleichen der Probensubstanz außerhalb dieser Ebene vermieden wird. Auch lässt sich auf diese Weise die Schärfentiefe des Lichtblattes an das jeweils beobachtete Objektfeld anpassen.

Nachteilig bei den vorgenannten Anordnungen ist weiterhin, dass das damit erzeugte Lichtblatt in seinem Querschnitt ein gaußförmiges Intensitätsprofil aufweist, womit eine gleichförmige Ausleuchtung der zu untersuchenden Probenebene nicht möglich ist.

In WO 2004/0530558 A1 ist ein Verfahren beschrieben, bei dem eine lichtblattartige Beleuchtung aufgrund einer Relativbewegung zwischen einem linienförmigen Lichtfeld und der zu beobachtenden Probe erzeugt wird. Die lichtblattartige Beleuchtung entsteht, indem das Lichtfeld aufgrund der Relativbewegung zeitlich aufeinander folgend mehrfach aneinander gereiht wird. Nachteilig ist hier die Schattenbildung innerhalb der zu untersuchenden Ebene der Probe, bedingt durch in der Beleuchtungsrichtung liegende, für das Beleuchtungslicht nicht transparente Teile der Probensubstanz.

In EP 0 248 204 B1 ist die Erzeugung einer linienförmigen Beleuchtung mit einem linearen Faserarray und nachgeordneter Zylinderlinse beschrieben, wobei allerdings ebenfalls die Geometrie des Lichtblattes nicht variiert werden kann.

Die Veröffentlichung US 4,826,299 beschreibt die Formung eines Lichtblattes mit einer Powell-Linse. Die Powell-Linse weist in einer Koordinatenrichtung ein asphärisches Profil auf und ist in der dazu orthogonalen Koordinate eben, so dass aus einem Lichtbündel ein nahezu homogenisiertes linienförmiges Lichtfeld geformt wird und als Lichtblatt genutzt werden kann. Allerdings ist die Geometrie dieses Lichtblattes ebenfalls nicht veränderbar, und zwar im Hinblick auf seine Dicke und seine Länge, so dass eine optimale Durchleuchtung der zu untersuchenden Probenebene bei Verwendung verschiedener Objektive, deren optische Eigenschaften voneinander abweichen, auch hier nicht möglich ist.

Nachteilig bei allen vorgenannten Anordnungen ist die unerwünschte Schattenbildung innerhalb der zu untersuchenden Ebene der Probe, bedingt durch in der Beleuchtungsrichtung liegende, für das Beleuchtungslicht nicht transparente Teile der Probensubstanz.

Von diesem Stand der Technik ausgehend liegt der Erfindung die Aufgabe zugrunde, eine optische Anordnung zum Erzeugen eines Lichtblattes zu schaffen, das die Beobachtung einzelner Ebenen einer Probe mit höherer Effizienz ermöglicht als die bisher bekannten Anordnungen.

Erfindungsgemäß sind bei einer optischen Anordnung zum Erzeugen eines Lichtblattes der eingangs genannten Art Mittel vorgesehen zur Variation des Querschnittes des Lic.htblattes, zur Variation der Länge des Lichtblattes, und/oder zur Beeinflussung der Richtung, mit der innerhalb des Lichtblattes verlaufende einzelne Strahlungsanteile auf die Probensubstanz gerichtet sind.

Damit wird sowohl die Anpassung der Geometrie des Lichtblattes an die Beleuchtungserfordernisse bei der Beobachtung ein und derselben Probenebene mit mehreren verschiedenartigen Objektiven ermöglicht, als auch bei Bedarf eine Reduzierung der Schatten erreicht, die sich aufgrund der Beleuchtung innerhalb der beobachteten Probenebene ausbilden.

In einer ersten Ausgestaltung der erfindungsgemäßen Anordnung ist eine Lichtquelle vorhanden, die ein Bündel kohärenten Lichtes abstrahlt, und im Verlaufe dieses Lichtbündels sind vorgesehen:
- ein Kollimator,
- ein asphärisches optisches Element,
- eine Linse oder Linsengruppe zur Realisierung einer Feldblendenebene, und
- eine Linse oder Linsengruppe zur Realisierung einer Aperturblendenebene.

Dabei wird mit dem Kollimator zunächst ein Bündel parallelen Lichtes erzeugt und dieses dann mittels des asphärischen optischen Elementes in die Form des Lichtblattes umgewandelt. Als asphärisches optisches Element kommt beispielsweise eine Powell-Linse in Betracht.

Der Lichtblattquerschnitt wird an die Beleuchtungserfordernisse eines bestimmten Objektivs mit einer in die Feldblendenebene gestellten Feldblende angepasst, deren Blendenöffnung dem gewünschten Querschnitt adäquat ist. Wird das Objektiv gegen ein Objektiv mit beispielsweise abweichender Apertur oder abweichendem Abbildungsmaßstab gewechselt, wird die Feldblende gegen eine Feldblende ausgetauscht, deren Blendenöffnung dem nun gewünschten Querschnitt entspricht. Mit dem Austausch der Blenden wird eine Querschnittsänderung hinsichtlich der Breite des Lichtblattes erzielt, das heißt es wird dessen Ausdehnung in der Koordinate Y variiert.

Die Blenden können beispielsweise auf einem Wechselrad angeordnet sein. Das Wechseln der Blenden kann manuell ausgelöst oder auch automatisch veranlasst werden, wobei die Auswahl der jeweiligen Feldblende in Abhängigkeit von den Eigenschaften des verwendeten Objektivs vorgenommen wird.

In analoger Weise wird mit Aperturblenden verfahren, die in Abhängigkeit von den Eigenschaften des jeweils verwendeten Objektivs in die Aperturblendenebene gestellt werden. Mit dem Austausch der Aperturblenden untereinander wird die Geometrie des Lichtblattes hinsichtlich ihrer Dicke und ihrer Länge beeinflusst. Die Ursache für die gemeinsame Beeinflussung der Dicke und Länge liegt darin, dass bei der anamorphotischen Generierung des Lichtblattes mittels des asphärischen optischen Elementes der Schärfentiefebereich vom inversen Quadrat der numerischen Apertur abhängig ist.

In einer alternativen Ausführung wird die Querschnittsbeeinflussung nicht wie beschrieben durch das Wechseln von Blenden, sondern durch eine oder zwei in den Beleuchtungstrahlengang gestellte Zoomoptiken vorgenommen.

Hierbei werden die Linsengruppe zur Realisierung einer Feldblende und/oder die Linsengruppe zur Realisierung einer Aperturblende so ausgestaltet, dass sie eine variable Brennweite besitzen.

Weiterhin ist bei dieser ersten Ausgestaltung der erfindungsgemäßen Anordnung optional eine Einrichtung zur Reduzierung der Schattenbildung in der Probe vorgesehen.

Zu diesem Zweck ist in einer Pupillenebene des bereits zum Lichtblatt geformten Strahlengangs eine so genannte Wackelplatte angeordnet, oder es ist in einer zur Feldblendenebene konjugierten Ebene ein Schwingspiegel oder ein Polygonscanner positioniert.

Aufgrund der so erzeugten Ablenkbewegung wird die Richtung der Strahlungsanteile des Lichtblattes so beeinflusst, dass diese zeitlich nacheinander in wechselnden Richtungen auf die Probensubstanz treffen, so dass Abschattungen durch nicht transparente Probensubstanzen innerhalb der beleuchteten Probenebene vermieden, zumindest weitestgehend reduziert werden.

In einer zweiten Ausgestaltung der erfindungsgemäßen Anordnung ist eine Lichtquelle vorhanden, die ein Bündel räumlich partiell kohärenten Lichtes abstrahlt, und im Verlauf dieses Lichtbündels sind ein oder zwei Zylinderlinsenarrays sowie eine feste oder variable Kollimationsoptik angeordnet, wobei die laterale Kohärenzlänge kleiner ist als die Periode der Zylinderlinsenarrays.

Damit wird sowohl dieses Lichtbündel in die Form des Lichtblattes umgewandelt, als auch die Richtung einzelner Strahlungsanteile so beeinflusst, dass diese nicht parallel zueinander auf die Probensubstanz treffen, wodurch Abschattungen durch nicht transparente Probensubstanzen innerhalb der beleuchteten Probenebene vermieden oder zumindest weitestgehend reduziert werden.

Die Zylinderlinsenarrays übernehmen hierbei in einer Ebene, beispielsweise der Ebene Y-Z, die Funktion eines Wabenkondensors, wobei die durch das erste Array erzeugten einzelnen Strahlungsanteile bzw. Teilaperturen mit oder ohne Hilfe des zweiten Arrays und der Kollimationsoptik in der Feldblendenebene räumlich überlagert werden. Bei Anwesenheit des zweiten Arrays wird die Intensitätsverteilung in der Feldblendenebene homogener als bei Abwesenheit. Durch eine variable Kollimationsoptik kann die Geometrie des Lichtblattes angepasst werden.

Das räumlich partiell kohärente Licht wird beispielsweise mittels einer zeitlich partiell kohärenten Lichtquelle erzeugt, etwa eines Breitbandlasers, in dessen Strahlengang zum Zweck der Reduzierung der räumlichen Kohärenz ein dispersives optisches Element gestellt ist. Als dispersives optisches Element kommt ein Gitter, ein Prisma oder auch ein Stufenspiegel in Betracht.

In einer dritten Ausgestaltung der erfindungsgemäßen Anordnung besteht die Lichtquelle aus einem Array einzelner Laserlichtquellen. Diesen nachgeordnet befinden sich eine Zylinderlinse oder eine Grin-Linse, die sich über das gesamte Array erstrecken, sowie eine Kollimationsoptik. Jede Laserlichtquelle leuchtet dabei das gesamte gewünschte Lichtblatt vollständig aus. Die Breite des Lichtblattes in der Y-Z Ebene wird durch die abgestrahlte Apertur der Laserlichtquellen und die Brennweite der Kollimationsoptik bestimmt. Die Dicke des Lichtblattes in der Ebene X-Z wird durch die abgestrahlte Apertur der Lichtquellen und die Brennweiten der Zylinderoptik sowie der Kollimationsoptik bestimmt. Aufgrund der räumlichen Anordnung der Laserlichtquellen leuchtet jede Lichtquelle die Probenebene mit unterschiedlichem Winkel aus, so dass, wie bereits oben beschrieben, Abschattungen innerhalb der Probenebene vermieden oder zumindest weitgehend reduziert werden.

Bei Grin-Linsen wird im Gegensatz zu konventionellen Sammellinsen die Brennweite durch eine kontinuierliche Brechzahlvariation im Linsenmaterial beeinflusst.

In einer vierten Ausgestaltung der erfindungsgemäßen Anordnung ist in dem von einer kohärenten Lichtquelle kommenden und aus einer Lichtleitfaser austretenden Lichtbündel ein mikrooptisches Element zur Umwandlung des Lichtbündels in die Form eines Lichtblattes eingeordnet.

Dieses mikrooptische Element kann eine mit optisch wirksamen Freiformflächen versehene Mikrooptik oder eine in Form einer Grin-Linse ausgebildete Mikrooptik sein, mit zugleich homogenisierender Wirkung in einer Querschnittsrichtung und fokussierender Wirkung in der orthogonalen Querschnittsrichtung.

Eine fünfte Ausgestaltung der erfindungsgemäßen Anordnung sieht eine Lichtquelle vor, von der wiederum ein Bündel kohärenten Lichtes abgestrahlt wird, in dessen Verlauf vorgesehen sind:
- eine anamorphotische Optik, beispielsweise in Form eines Zylinderlinsenteleskops, zur Erzeugung eines Lichtbündels mit elliptischem Querschnitt,
- eine optische Ablenkeinrichtung, beispielsweise in Form eines Schwingspiegels, eines Polygonscanners oder eines Digital Micromirror Device (DMD), zur Erzeugung einer Scannbewegung dieses Lichtbündels, sowie
- eine fokussierende Linse oder Linsengruppe, durch die hindurch das gescannte Lichtbündel auf die Probe gerichtet ist.

Das DMD besteht in an sich bekannter Weise aus etwa 500.000 mikroskopisch kleinen Spiegeln, die sich einzeln sehr schnell kippen lassen.

Mit dieser Anordnung wird eine lichtblattartige Beleuchtung erzeugt, indem aufgrund der Scannbewegung das in die Probe fokussierte Lichtbündel mit elliptischem Querschnitt in zeitlicher Folge mehrfach aneinander gereiht wird. Die Aneinanderreihung der einzelnen fokussierten Lichtbündel ergibt die Geometrie des Lichtblattes.

Die Vermeidung oder Reduzierung von Abschattungen durch nicht transparente Probensubstanzen innerhalb der beleuchteten Probenebene wird bei dieser Ausgestaltung der erfindungsgemäßen Anordnung durch das Zylinderlinsenteleskop erreicht, durch das, wie bereits weiter oben beschrieben, die Richtung einzelner Strahlungsanteile beeinflusst wird.

Die Erfindung soll nachfolgend anhand von Ausführungsbeispielen näher erläutert werden. In den zugehörigen Zeichnungen zeigen:
- Fig.1: Das Prinzip einer ersten Ausgestaltung der erfindungsgemäßen Anordnung mit Blenden zur Beeinflussung der Geometrie des Lichtblattes,
- Fig.2: das Prinzip der ersten Ausgestaltung der erfindungsgemäßen Anordnung, hier jedoch mit einer Zoomoptik zur Beeinflussung der Geometrie des Lichtblattes,
- Fig.3: das Prinzip der ersten Ausgestaltung der erfindungsgemäßen Anordnung mit einer Wackelplatte zur Schattenreduktion,
- Fig.4: das Prinzip der ersten Ausgestaltung der erfindungsgemäßen Anordnung, hier jedoch mit einem Schwingspiegel zur Schattenreduktion.
- Fig.5: das Prinzip einer zweiten Ausgestaltung der erfindungsgemäßen Anordnung mit Zylinderlinsenarrays zur Formung des Lichtblattes und zur Schattenreduktion,
- Fig.6: ein Beispiel zur Erzeugung räumlich partiell kohärenten Lichtes zur Realisierung der Ausgestaltung nach Fig.5,
- Fig.7: das Prinzip einer dritten Ausgestaltung der erfindungsgemäßen Anordnung mit einem Array aus einzelnen Laserlichtquellen zur Formung des Lichtblattes,
- Fig.8: das Prinzip einer vierten Ausgestaltung der erfindungsgemäßen Anordnung, bei der das Lichtblatt mit einem mikrooptischen Element geformt wird,
- Fig.9: das Prinzip einer fünften Ausgestaltung der erfindungsgemäßen Anordnung, bei der das Lichtblatt durch eindimensionales Scannen eines Lichtbündels geformt wird.

In einer ersten Darstellung mit der Bezeichnung "Stand der Technik", die kurz der Erläuterung des Prinzips der Selective Plane Illumination Microscopy (SPIM) dienen soll, ist eine Probe 1, beispielsweise eine biologische Substanz, von einem transparenten Gel 2 umschlossen. Es handelt sich dabei um eine dreidimensionale Probe 1, die sich sowohl in der Zeichenebene als auch senkrecht zur Zeichenebene erstreckt. Es sei angenommen, dass das Gel 2 zu einem Kreiszylinder mit senkrecht zur Zeichenebene ausgerichteter Rotationsachse geformt ist.

Wie bereits weiter oben dargelegt, werden bei der SPIM-Technologie dreidimensionale Bilder der Probe 1 auf der Grundlage mehrerer optischer Schnitte durch einzelne Probenebenen gewonnen. Es sei angenommen, dass die zu beobachtende Ebene der Probe 1 die Dicke d in der Zeichenebene hat.

Um diese Ebene beobachten zu können, ist ein Lichtblatt 3 erforderlich, das etwa eine Länge 1 und eine möglichst über die gesamte Länge 1 gleich bleibende Dicke d in der Zeichenebene aufweist und sich senkrecht zur Zeichenebene mindestens über die gesamte Abmessung der Probe 1 erstreckt.

Im Zusammenhang mit der vorliegenden Erfindungsbeschreibung sei davon ausgegangen, dass sich die Länge 1 des Lichtblattes 3 in der Koordinatenrichtung Z, seine Dicke d in der Koordinatenrichtung X und seine Breite b senkrecht zur Zeichenebene in der Koordinatenrichtung Y erstreckt. Die Koordinatenrichtung Z entspricht dabei zugleich der Richtung des Beleuchtungsstrahlengangs.

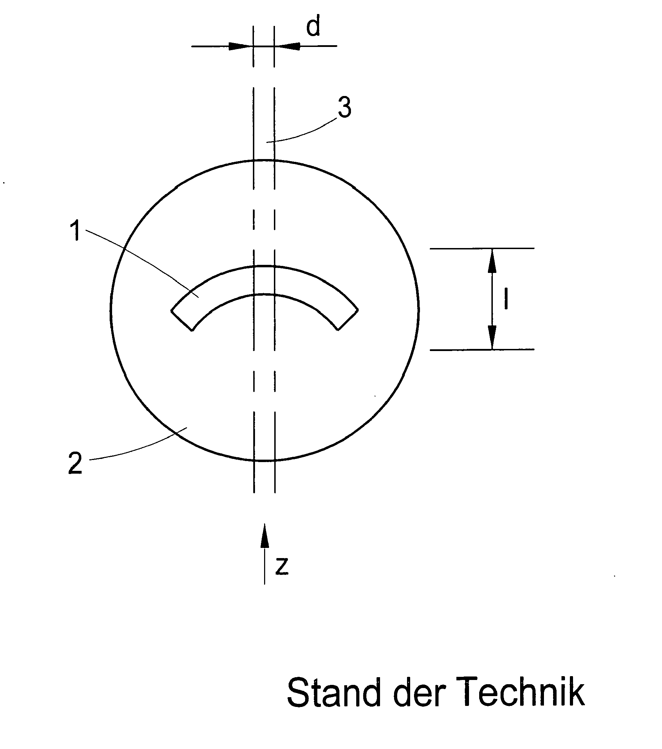

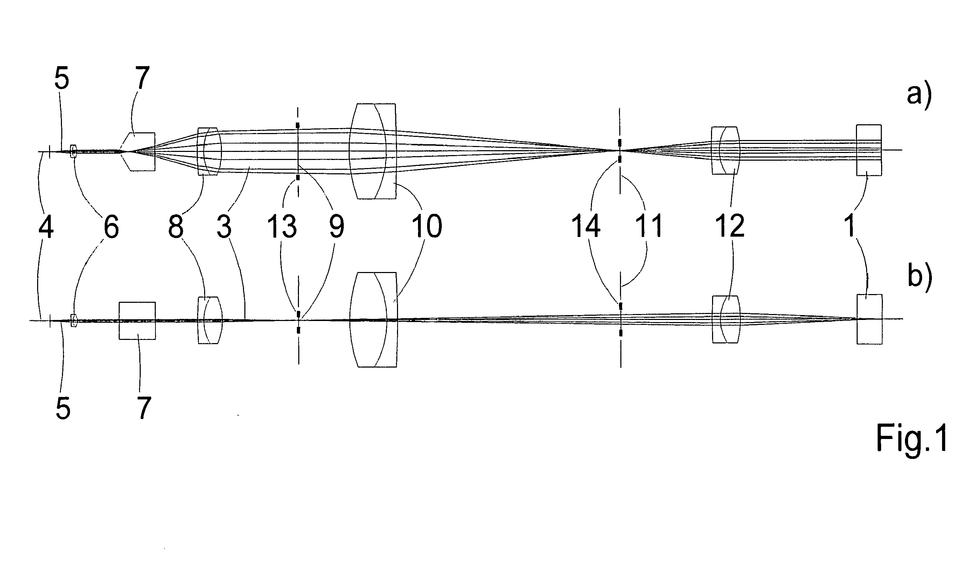

In Fig.1 ist eine erste Ausgestaltung der erfindungsgemäßen Anordnung dargestellt. Dabei strahlt eine (nicht gezeichnete) Lichtquelle kohärentes Licht aus, das aus einer Lichtleitfaser 4 als Lichtbündel 5 austritt und durch einen Kollimator 6 hindurch auf ein asphärisches Element 7 gerichtet ist.

Beim Durchgang durch das asphärische Element 7 wird das Lichtbündel 5 in der in Fig.1a dargestellten Ebene Y-Z aufgeweitet, während das Lichtbündel 5 das asphärische Element 7 in der in Fig.1b dargestellten Ebene X-Z im Wesentlichen unverändert passiert.

Mit dieser Umformung ergibt sich die Dicke d des Lichtblattes 3 in der Koordinatenrichtung X und seine Breite b in der Koordinatenrichtung Y.

Wie in Fig.1a und Fig.1b weiter gezeigt, passiert der zu dem Lichtblatt 3 geformte Beleuchtungsstrahlengang zunächst eine Linsengruppe 8, beispielsweise ein Achromat, zur Realisierung einer Feldblendenebene 9 ausgebildet ist, danach eine weitere Linsengruppe 10 zur Realisierung einer Aperturblendenebene 11 und schließlich eine dritte Linsengruppe 12, ausgebildet als Fokussieroptik, durch welche das Lichtblatt 3 in die Probe 1 gerichtet ist.

Wird nun in die Feldblendenebene 9 eine Feldblende 13 gestellt, so ist mit der Blendenöffnung der Feldblende 13 die Geometrie des Lichtblattes 3 im Hinblick auf seine Breite b definiert. Eine in die Aperturblendenebene 11 gestellte Aperturblende 14 legt mit ihrer Blendenöffnung die Dicke d und die Länge 1 des Lichtblattes 3 fest.

Auf diese Weise kann mit einer Feldblende 13 bestimmter Blendenöffnung und einer Aperturblende 14 bestimmter Blendenöffnung der Querschnitt und die Länge 1 des Lichtblattes 3 an ein zur Beobachtung der ausgewählten Ebene der Probe 1 genutztes Objektiv angepasst werden.

Wird zur Beobachtung derselben Ebene der Probe 1 dieses Objektiv gegen ein anderes Objektiv gewechselt, beispielsweise um dieselbe Ebene mit einem anderen Abbildungsmaßstab beobachten zu können, ist erfindungsgemäß vorgesehen,
- die aktuelle Feldblende 13 gegen eine Feldblende 13 auszutauschen, deren Blendenöffnung auf dieses zweite Objektiv abgestimmt ist, oder
- die aktuelle Aperturblende 14 gegen eine Aperturblende 14 auszutauschen, deren Blendenöffnung auf dieses eingewechselte Objektiv abgestimmt ist, oder
- gleichzeitig beide Blenden 13, 14 zu wechseln, um eine Anpassung des Querschnitts und der Länge 1 des Lichtblattes an das eingewechselte Objektiv vorzunehmen und damit eine effiziente Beobachtung der Probe 1 in der gewählten Ebene zu ermöglichen.

Dicke d und Länge 1 des Lichtblattes 3 lassen sich dabei nicht unabhängig voneinander einstellen, da, wie bereits dargelegt bei der anamorphotischen Generierung des Lichtblattes 3 mittels des asphärischen optischen Elementes 7 der Schärfentiefebereich vom inversen Quadrat der numerischen Apertur des fokussierten Lichtbündels abhängig ist.

Es ist denkbar, die Blenden 13, 14 manuell zu wechseln oder auch automatisch, wobei im letzteren Fall die Blenden 13, 14 beispielsweise auf mit Antrieben gekoppelten Wechselrädern angeordnet und die Antriebe mit einer Ansteuereinheit gekoppelten sind, von der Stellbefehle ausgehen, die in Abhängigkeit von den Eigenschaften des eingewechselten Objektives generiert werden.

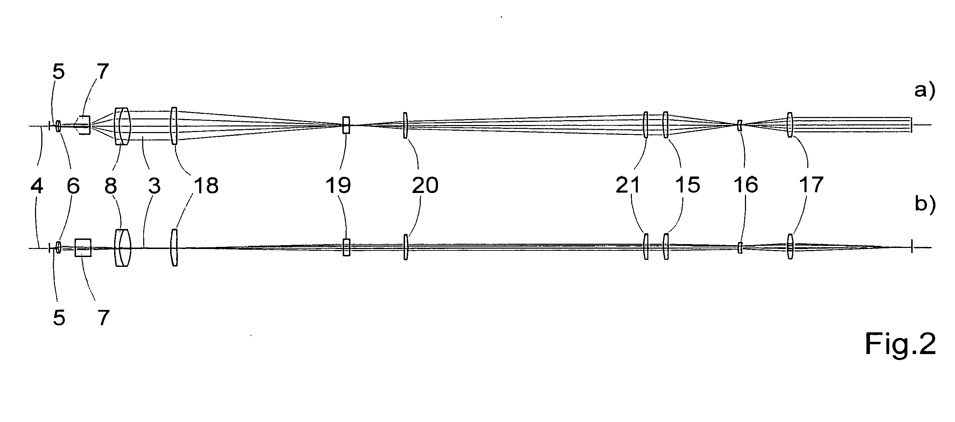

Fig.2 zeigt die erste Ausgestaltung der erfindungsgemäßen Anordnung in einer Variante, bei welcher zur Beeinflussung der Geometrie des Lichtblattes 3 anstelle der Feld- und Aperturblenden eine Zoomoptik vorgesehen ist, die hier beispielsweise aus den Linsengruppen 15, 16 und 17 besteht.

Der Übersichtlichkeit halber werden in Fig.2 für die gleichen optischen Baugruppen auch dieselben Bezugszeichen wie in Fig.1 verwendet. Wie in Fig.1 ist auch hier die Ebene Y-Z in einer Fig.2a und die Ebene X-Z in einer Fig.2b dargestellt.

Zur Umformung des Lichtbündels 5 in ein Lichtblatt 3 ist bei der Variante nach Fig.2 analog zu Fig.1 wiederum ein asphärisches Element 7 vorgesehen, dem eine Linsengruppe 8, bevorzugt ein Achromat, zur Realisierung einer Feldblendenebene nachgeordnet ist, wobei in der Feldblendenebene ein Lichtblatt 3 mit homogenisierter Strahlungsintensität im Querschnitt entsteht. Die Feldblendenebene befindet sich beispielsweise unmittelbar vor einer Linse 18. Das Lichtblatt.3 wird mithilfe einer Linse 19 und den Linsengruppen 15, 16 und 17 der Zoomoptik in die Objektebene und damit in die Probe 1 abgebildet.

Die Beeinflussung der Geometrie des Lichtblattes 3 mit der Zoomoptik erfolgt, indem die Brennweite des Zooms beispielsweise durch axiale Verschiebung der Linsengruppen 15 und 17 variiert wird. Die Linsen 18 bis 21 sorgen für die richtige Pupillenlage innerhalb der Zoomoptik und garantieren einen weitgehend kollimierten Strahlverlauf in der Feldblendenebene im Y-Z Schnitt. Dabei sind in dieser Ausgestaltungsvariante die Linsen 20 und 21 als Zylinderlinsen ausgebildet.

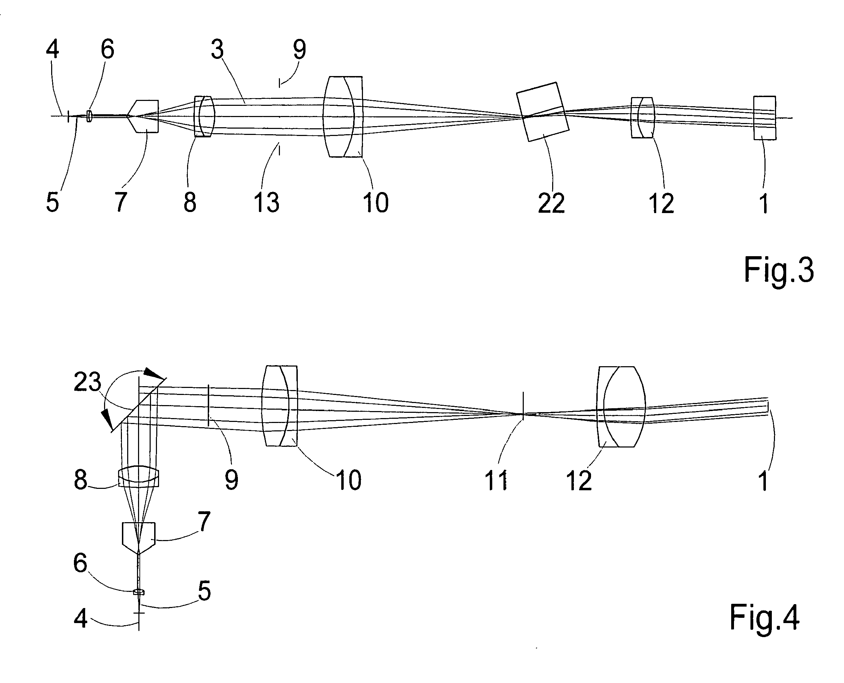

Fig.3 zeigt eine modifizierte Variante der bisher anhand Fig.1 und Fig.2 erläuterten ersten Ausgestaltung der erfindungsgemäßen Anordnung. Hier werden wiederum für gleiche Bauteile gleiche Bezugszeichen verwendet.

Dargestellt ist hier lediglich der Schnitt in der Ebene Y-Z; auf die Darstellung in der Ebene X-Z wird verzichtet, da sich diese analog zu Fig.1 und Fig.2 herleiten lässt.

Im Unterschied und in Ergänzung zu den Varianten nach Fig.1 und Fig.2 ist in der Variante nach Fig.3 eine Einrichtung zur Reduzierung der Schattenbildung in der Probe 1 vorgesehen. Mit der Reduzierung der Schattenbildung soll verhindert werden, dass Probensubstanz, die in Richtung der Beleuchtungsstrahlung innerhalb der beobachteten Probenebene hinter Probenteilchen liegen, die für das Beleuchtungslicht nicht transparent sind, durch diese abschattet wird.

Diesbezüglich ist aus Fig.3 ersichtlich, dass das Lichtblatt 3, nachdem es die Feldblende 13 und die Linsengruppe 10 passiert hat, auf eine Wackelplatte 22 trifft, die sich in einer Pupillenebene des zum Lichtblatt 3 geformten Beleuchtungsstrahlengangs befindet. Aufgrund der oszillierende Bewegungen der Wackelplatte wird die Richtung der Strahlungsanteile des Lichtblattes 3 so beeinflusst, dass diese zeitlich nacheinander in wechselnden Richtungen bzw. unter verschiedenen Winkeln auf die Probensubstanz treffen, so dass nicht transparente Probensubstanzen hinterleuchtet und Abschattungen durch diese Probensubstanzen innerhalb der beleuchteten Probenebene vermieden, zumindest weitestgehend reduziert werden.

Eine weitere Variante zur Schattenreduktion, bezogen auf die bisher anhand Fig.1 bis Fig.3 beschriebene erste Ausgestaltung der erfindungsgemäßen Anordnung, ist in Fig.4 dargestellt. Hier ist in einer zur Feldblendenebene 9 konjugierten Ebene ein Schwingspiegel 23 positioniert. Der Schwingspiegel 23 bewirkt aufgrund seiner oszillierenden Bewegung ebenfalls, analog zu der Wackelplatte in Fig.3, die Beeinflussung der Richtung der Strahlungsanteile des Lichtblattes 3 so, dass diese in jeweils unterschiedlichen Richtungen auf die Probensubstanz treffen.

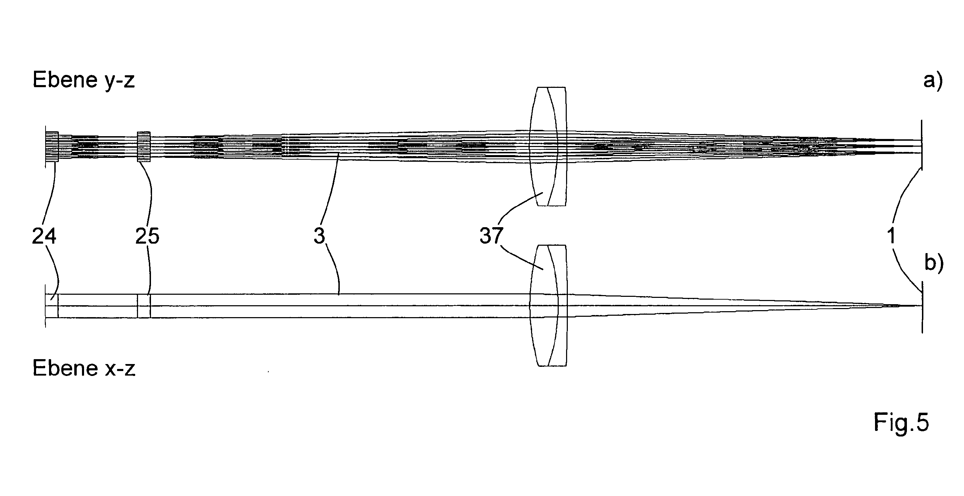

In einer zweiten, in Fig.5 dargestellten Ausgestaltung der erfindungsgemäßen Anordnung wird eine Lichtquelle vorausgesetzt, die ein Bündel räumlich partiell kohärenten Lichtes abstrahlt. Im Verlaufe des von dieser (zeichnerisch nicht darstellten) Lichtquelle ausgehenden Lichtes sind zwei Zylinderlinsenarrays 24 und 25 angeordnet, die zusammen mit der einer Kollimationsoptik 37 einen in der Ebene Y-Z wirkenden Wabenkondensor bilden, durch welchen eine Homogenisierung der Strahlungsintensität in dieser Ebene Y-Z erzielt wird. In der Ebene X-Z wirkt lediglich die Kollimationsoptik 37, welche die Dicke d des Lichtblattes in der Probenebene generiert. Dargestellt ist in Fig.5a hier wiederum die Ebene Y-Z, in Fig.5b die Ebene X-Z.

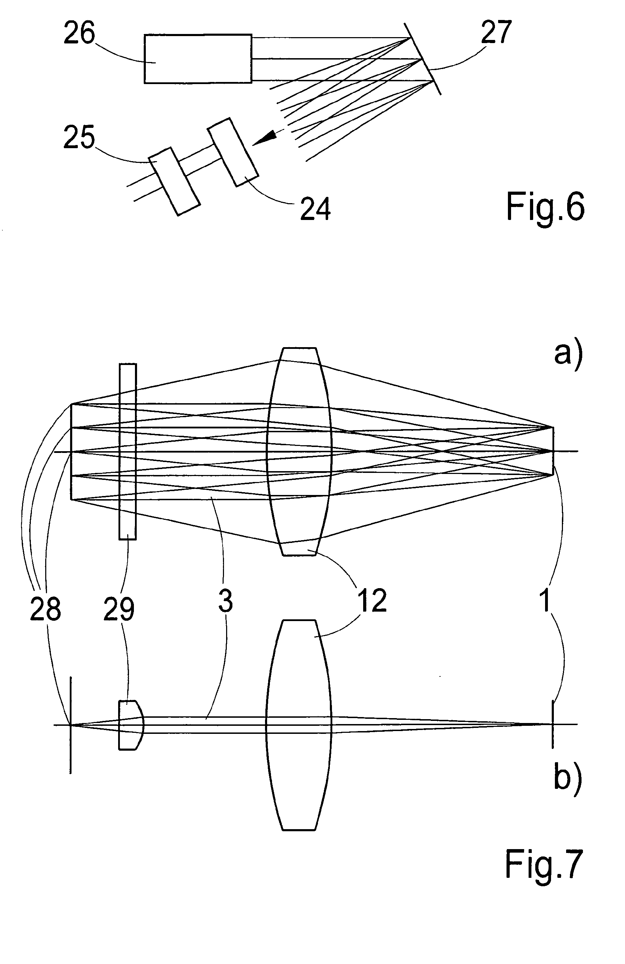

Das räumlich partiell kohärente Licht, das für die erfindungsgemäße Anordnung nach Fig.5 vorausgesetzt wird, kann beispielsweise wie in Fig.6 dargestellt erzeugt werden.

Hier ist ein Breitbandlaser 26 vorgesehen, von dem eine zeitlich partiell kohärente Strahlung ausgeht und auf ein Gitter 27 gerichtet ist. Das Gitter 27 wirkt als dispersives optisches Element, wodurch das vom Gitter 27 reflektierte Licht in seiner räumlichen Kohärenz reduziert ist. Dieses Licht trifft nun auf die Zylinderlinsenarrays 24 und 25, wie in Fig.5 dargestellt. Anstelle des Gitters 27 können alternativ auch dispersive optische Elemente in Form von Prismen oder Stufenspiegeln verwendet werden.

Fig.7 zeigt eine dritte Ausgestaltung der erfindungsgemäßen Anordnung zum Erzeugen eines Lichtblattes 3. Hierbei besteht die Lichtquelle aus einem Array einzelner Laserlichtquellen 28. Jede Lichtquelle generiert dabei mit Hilfe der Zylinderlinse 29 und der Linsengruppe 12 ein vollständiges Lichtblatt 3. Die räumliche Anordnung der Laserlichtquellen 28 beeinflusst die Richtung einzelner Strahlungsanteile so, dass Abschattungen durch nichttransparente Probensubstanzen innerhalb der beleuchteten Probenebene vermieden oder weitestgehend reduziert werden.

An Stelle der Zylinderlinse 29 ist auch die Verwendung einer Grin-Linse denkbar.

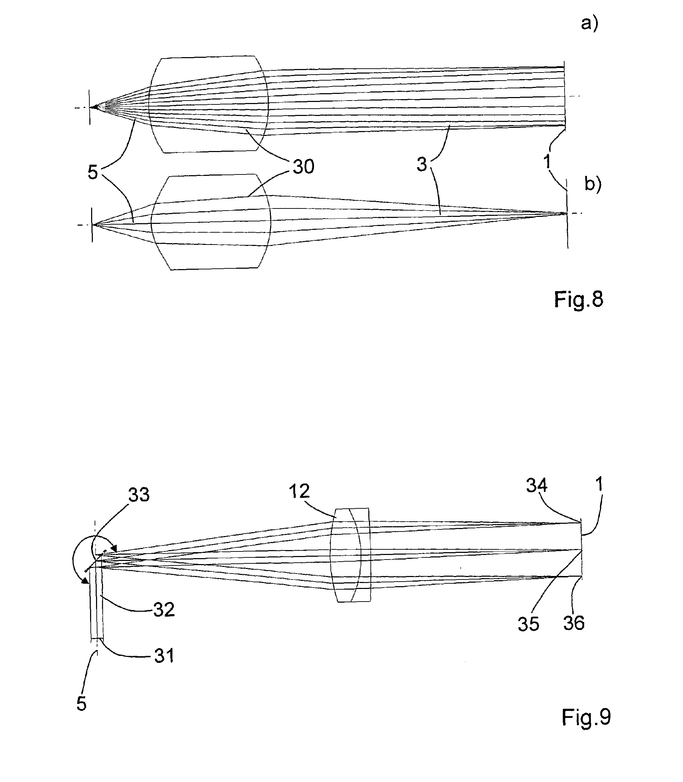

Fig.8 zeigt eine vierte Ausgestaltung der erfindungsgemäßen Anordnung. Hier ist ein von einer kohärenten Lichtquelle kommendes und aus einer Lichtleitfaser (nicht dargestellt) austretendes Lichtbündel 5 auf ein mikrooptisches Element 30 gerichtet, das für die Umwandlung des Lichtbündels 5 in die Form des Lichtblattes 3 sorgt. Dieses mikrooptische Element 30 kann beispielsweise eine mit optisch wirksamen Freiformflächen versehende Mikrooptik sein oder es kann in Form einer Grin-Linse ausgebildet sein.

Mit einem solchen mikrooptischen Element 30 wird neben der Umwandlung des Lichtbündels 5 in die Form des Lichtblattes 3 zugleich auch eine homogenisierende Wirkung in der Ebene Y-Z (dargestellt in Fig.8a) und eine fokussierende Wirkung in der orthogonalen Ebene X-Z (dargestellt in Fig.8b) erzielt.

Eine weitere, fünfte Ausgestaltung der erfindungsgemäßen Anordnung ist in Fig.9 dargestellt. Zur Realisierung dieser Ausgestaltung wird eine Lichtquelle vorausgesetzt, von der wiederum ein Lichtbündel 5 kohärenten Lichtes ausgeht. Das Lichtbündel 5 ist auf eine anamorphotische Optik, beispielsweise in Form eines Zylinderteleskops 31 gerichtet, das eine unabhängige Querschnittsänderung des Lichtbündels 5 in der X- und der Y-Achse bewirkt, so dass das Lichtbündel einen elliptischen Querschnitt erhält. Im weiteren Verlauf ist eine optische Ablenkeinrichtung angeordnet, hier beispielsweise in Form eines Schwingspiegels 33. Anstelle des Schwingspiegels 33 ist auch die Verwendung eines Polygonscanner oder eines DMD zur Erzeugung einer Scannbewegung denkbar.

Das mit dem Schwingspiegel 33 scannend abgelenkte Lichtbündel ist durch die Linsengruppe 12 hindurch in die Probe 1 gerichtet.

Infolge der Scannbewegung des Schwingspiegels 33 befindet sich das in die Probe fokussierte elliptische Lichtbündel in zeitlicher Folge an den Positionen 34, 35 und 36, wobei die Aneinanderreihung der jeweils beleuchteten Bereiche in der Probe 1 das gewünschte Lichtblatt 3 ergibt.

In dieser Ausgestaltung kommt es zur Vermeidung oder Reduzierung von Abschattungen innerhalb der beobachteten Probenebene aufgrund der bei der Fokussierung auftretenden Strahlwinkel. Die Strahlwinkel sind durch die Eigenschaften der anamorphotischen Optik 31 einstellbar.

### Bezugszeichenliste

- 1: Probe
- 2: Gel
- 3: Lichtblatt
- 4: Lichtleitfaser
- 5: Lichtbündel
- 6: Kollimator
- 7: asphärisches optisches Element
- 8: Linsengruppe
- 9: Feldblendenebene
- 10: Linsengruppe
- 11: Aperturblendenebene
- 12: Linsengruppe
- 13: Feldblende
- 14: Aperturblende
- 15,16,17: Linsengruppen
- 18,19,20,21: Linsen
- 22: Wackelplatte
- 23: Schwingspiegel
- 24: Zylinderlinsenarray
- 25: Zylinderlinsenarray
- 26: Breitbandlaser
- 27: Gitter
- 28: Laserlichtquellen
- 29: Zylinderlinse
- 30: mikrooptisches Element
- 31: Zylinderlinsenteleskop
- 32: Lichtbündel mit elliptischem Querschnitt
- 33: Schwingspiegel
- 34,35,36: Positionen
- 37: Kollimationsoptik

## Patentansprüche

1. Optische Anordnung zum Erzeugen eines Lichtblattes (3), insbesondere zur Beleuchtung einer dreidimensionalen Probe (1) bei der Selective Plane Illumination Microscopy (SPIM), umfassend:
- eine Lichtquelle zur Abstrahlung eines Lichtbündels (5), und
- optische Elemente zur Umwandlung dieses Lichtbündels (5) in die Form eines Lichtblattes (3) mit einem in den Koordinatenrichtungen X, Y ausgedehnten Querschnitt und einer in der Koordinatenrichtung Z ausgedehnten Länge,
**gekennzeichnet durch**
- Mittel zur Variation des Querschnittes,
- Mittel zur Variation der Länge, und/oder
- Mittel zur Beeinflussung der Richtung der Strahlungsanteile des Lichtblattes.

2. Optische Anordnung nach Anspruch 1, bei der die Lichtquelle ein Lichtbündel (5) kohärenten Lichtes abstrahlt und im Verlauf dieses Lichtbündels (5) vorgesehen sind:
- ein Kollimator (6),
- ein asphärisches optisches Element (7), bevorzugt in Form einer Powell-Linse, sowie
- eine Linse oder Linsengruppe (8) zur Realisierung einer Feldblendenebene (9), und
- eine Linse oder Linsengruppe (10) zur Realisierung einer Aperturblendenebene (11).

3. Optische Anordnung nach Anspruch 2, bei der als Mittel zur Variation des Querschnittes des Lichtblattes (3) mehrere in der Feldblendenebene (9) gegeneinander ausmehrere in der Feldblendenebene (9) gegeneinander austauschbare Feldblenden (13) mit unterschiedlichen Blendenöffnungen vorgesehen sind.

4. Optische Anordnung nach Anspruch 2 oder 3, bei der als Mittel zur Variation der Länge des Lichtblattes (3) mehrere in der Aperturblendenebene (11) gegeneinander austauschbare Aperturblenden (14) mit unterschiedlichen Blendenöffnungen vorgesehen sind.

5. Optische Anordnung nach Anspruch 2, bei der zur Variation des Querschnitts und/oder der Länge des Lichtblattes (3) mindestens eine Zoomoptik vorhanden ist.

6. Optische Anordnung nach einem der Ansprüche 2 bis 5, bei der zur Beeinflussung der Richtung einzelner Strahlungsanteile eine Wackelplatte (22) vorhanden ist.

7. Optische Anordnung nach einem der Ansprüche 2 bis 5, bei der zur Beeinflussung der Richtung einzelner Strahlungsanteile ein Schwingspiegel (23) oder ein Polygonscanner vorhanden ist.

8. Optische Anordnung nach Anspruch 1, bei der die Lichtquelle ein Lichtbündel (5) räumlich partiell kohärenten Lichtes abstrahlt und im Verlauf dieses Lichtbündels (5) ein zylinderförmiger Wabenkondensor, bevorzugt bestehend aus zwei eindimensionalen Zylinderlinsenarrays (24, 25) sowie einer Kollimationsoptik 37, angeordnet ist, wobei die laterale Kohärenzlänge kleiner ist als die Periode der Zylinderlinsenarrays (24, 25).

9. Optische Anordnung nach Anspruch 8, bei der zur Erzeugung des räumlich partiell kohärenten Lichtes eine zeitlich partiell kohärente Lichtquelle, insbesondere in Form eines Breitbandlasers (26), vorgesehen und dieser ein dispersives optisches Element, bevorzugt in Form eines Gitters (27), Prismas oder Stufenspiegels nachgeordnet ist.

10. Optische Anordnung nach Anspruch 1, bei der die Lichtquelle aus einem Array einzelner Laserlichtquellen (28) besteht und diesem Array eine Zylinderlinse (29) oder eine Grin-Linse nachgeordnet ist.

11. Optische Anordnung nach Anspruch 1, bei der als optisches Element zur Umwandlung des Lichtbündels (5) in die Form eines Lichtblattes (3) ein mikrooptisches Element (30), bevorzugt mit optisch wirksamen Freiformflächen oder in Form einer Grin-Linse, vorhanden ist mit homogenisierender Wirkung in einer Querschnittsachse und zugleich fokussierender Wirkung in der orthogonalen Querschnittsachse.

12. Optische Anordnung nach Anspruch 1, bei der die Lichtquelle ein Lichtbündel (5) kohärenten Lichtes abstrahlt und im Verlauf dieses Lichtbündels (5) vorgesehen sind:
- eine anamorphotische Optik, bevorzugt in Form eines Zylinderlinsenteleskops (31), zur Erzeugung eines Lichtbündels mit elliptischem Querschnitt, und diesem nachfolgend
- eine optische Ablenkeinrichtung, bevorzugt in Form eines Schwingspiegels (32), zur Erzeugung einer Scannbewegung dieses Lichtbündels, sowie
- eine fokussierende Linse oder Linsengruppe (12), durch die hindurch das gescannte Lichtbündel auf die Probe gerichtet ist.
